# EUROPEAN PATENT APPLICATION

(11) **EP 2 670 134 A1**
(43) Date of publication of application: **04.12.2013**
(21) Application number: 12739279.3
(22) Date of filing: 24.01.2012
(51) Int. Cl.: H04N 5/76, G06F 17/30, H04N 5/232, H04N 5/262, H04N 5/765

(54) **STILL IMAGE EXTRACTION DEVICE**

(30) Priority: 24.01.2011 JP 2011012000
(71) Applicant: ADC Technology Inc., Aichi 460-0003 (JP)
(72) Inventor: KAWANISHI, Tsuyoshi, Nagoya-shi Aichi 460-0003 (JP); NOZAWA, Takeo, Nagoya-shi Aichi 460-0003 (JP); KONDO, Takezumi, Nagoya-shi Aichi 460-0003 (JP); KURODA, Tatsumi, Nagoya-shi Aichi 460-0003 (JP)
(74) Representative: Diehl & Partner GbR
(86) International application number: PCT/JP2012/051460
(87) International publication number: WO 2012/102276

(57) **Abstract**

The present invention is a still image extraction apparatus for extracting a specific frame as a still image from a plurality of frames. The still image extraction apparatus includes: an extraction condition registration device, an extraction determination device, and an extraction device. The extraction condition registration device registers an extraction condition, which is specified by a user of the still image extraction apparatus, for extracting the still image in an extraction condition recording unit. The extraction determination device determines in a frame-by-frame manner whether or not the plurality of frames satisfy the extraction condition registered in the extraction condition recording unit. The extraction device extracts, as a still image, a frame that has been determined to satisfy the extraction condition.

## Description

### CROSS-REFERENCE TO RELATED APPLICATIONS

This international application claims the benefit of Japanese Patent Application No.2011-012000 filed January 24, 2011 in the Japan Patent Office, and the entire disclosure of Japanese Patent Application No.2011-012000 is incorporated herein by reference.

### TECHNICAL FIELD

The present invention relates to a still image extraction apparatus that extracts, as a still image, a specific frame from a plurality of frames of a moving image or the like.

### BACKGROUND ART

With regard to the aforementioned still image extraction apparatus, there is a known technique in which an evaluation value is set to each of a plurality of frames of a moving image or the like depending on a face direction and a facial expression, and then a frame having a high evaluation value is extracted (for example, see Patent Document 1).

### PRIOR ART DOCUMENTS

### PATENT DOCUMENTS

Patent Document 1: Japanese Unexamined Patent Application Publication No. 2010-109592

### SUMMARY OF THE INVENTION

### PROBLEMS TO BE SOLVED BY THE INVENTION

There has, however, been a problem that even when a frame having a high evaluation value is extracted as described above, a user may not necessarily like the extracted frame since conditions where users desire to extract as a still image may vary among different individuals. In view of the problem, therefore, an object of the present invention is to allow a user to extract a desired still image in a still image extraction apparatus that extracts, as a still image, a specific frame from a plurality of frames.

### MEANS FOR SOLVING THE PROBLEMS

A still image extraction apparatus with a first configuration devised to achieve the aforementioned object is a still image extraction apparatus for extracting a specific frame as a still image from a plurality of frames, which includes:
an extraction condition registration device configured to register an extraction condition, which is specified by a user of the still image extraction apparatus, for extracting the still image in an extraction condition recording unit,
an extraction determination device configured to determine in a frame-by-frame manner whether or not the plurality of frames satisfy the extraction condition registered in the extraction condition recording unit; and
an extraction device configured to extract, as a still image, a frame that has been determined to satisfy the extraction condition.

According to such still image extraction apparatus, it is possible to extract a specific still image from the plurality of frames in accordance with the extraction condition specified by the user. Thus, it is possible to extract a still image required by the user. Specific examples of the extraction condition include a facial expression when an object looks most beautiful, a moment of sunrise, a moment of accident, a photograph or picture similar to one taken at a previous time, and weather.

The still image extraction apparatus may have a second configuration that includes:
an exclusion condition registration device configured to register an exclusion condition, which is specified by the user of the still image extraction apparatus, for not extracting a still image in an exclusion condition recording unit;
an exclusion determination device configured to determine in a frame-by-frame manner whether or not the plurality of frames satisfy the exclusion condition registered in the exclusion condition recording unit; and
an extraction inhibition device configured to inhibit extraction of a frame determined to satisfy the exclusion condition among frames determined to satisfy the extraction condition.

According to such still image extraction apparatus, it is possible not to extract a frame that satisfies the exclusion condition even when the frame satisfies the extraction condition. Thus, it is possible to suppress extraction of an unnecessary frame. Specific examples of the exclusion condition include blinking of an imaged person and defocus.

Also, the still image extraction apparatus may have a third configuration that includes: an extraction condition retrieving device configured to retrieve the extraction condition from a server that is located outside the still image extraction apparatus and stores an extraction condition for extracting a still image.

According to such still image extraction apparatus, it is possible to retrieve a condition to extract a favorite still image from the server. Thus, it is possible for anyone to easily set a moment to specify a still image.

Further, the still image extraction apparatus may have a fourth configuration that includes an extraction condition transmission device configured to transmit the extraction condition recorded in the extraction condition recording unit to the server that stores the extraction condition for extracting a still image and also stores, when receiving an extraction condition from outside, the received extraction condition.

According to such still image extraction apparatus, an extraction condition set by a user may be transmitted to the server. Thus, it is possible, in combination with the aforementioned third configuration, to share the extraction condition with other image extraction apparatuses.

Also, the still image extraction apparatus may have a fifth configuration in which:
the exclusion condition registration device is capable of registering, as the exclusion condition, inhibition of extraction of a similar still image,
the exclusion determination device categorizes, in a case where inhibition of extraction of a similar still image is registered as the exclusion condition in the exclusion condition recording unit, the plurality of frames into groups each consisting of similar frames, and determines whether or not two or more frames are present in each of the groups, and
the extraction inhibition device inhibits extraction of two or more frames from the each of the groups.

According to such still image extraction apparatus, it is possible to suppress extraction of a plurality of similar still images. Thus, it is possible to save costs when printing the extracted still image and to reduce difficulty in selecting the still image to be printed.

Specific examples of the present invention include a configuration wherein in a case where a frame in a same group has already been selected, any frame selected thereafter is disregarded, and a configuration wherein frames in a same group are sequentially overwritten. The present invention may be an invention dependent on the inventions described as the third configuration and the fourth configuration without considering the description of the invention hereinafter.

In particular, the still image extraction apparatus may have a sixth configuration in which the extraction device extracts a frame that most satisfies the extraction condition from the each of the groups.

According to such still image extraction apparatus, it is possible to extract only a best suited frame desired by the user.
Further, the still image extraction apparatus may have a seventh configuration in which:
the extraction condition registration device is capable of registering a face photograph of a specific person and also, as the extraction condition, extraction of a frame including a face that is similar to the face photograph, and
the extraction determination device determines, in a case where extraction of a frame including a face that is similar to the face photograph is registered as the extraction condition in the extraction condition recording unit, whether or not a face included in each of the frames is similar to the face photograph recorded in the extraction condition recording unit.

According to such still image extraction apparatus, it is possible to register a face photograph with a facial expression to be extracted, and to extract a frame including a face with a facial expression similar to the face photograph. Thus, it is possible to easily extract a still image with the user's favorite facial expression.

Further, the still image extraction apparatus may have an eighth configuration in which:
the extraction condition registration device is capable of registering, as the extraction condition, extraction of a moment of a collision of an object,
the extraction determination device, in a case where extraction of a moment of a collision of an object is registered as the extraction condition in the extraction condition recording unit, detects a movement of an object present in respective frames by sequentially and mutually comparing the frames along chronological order, and determines whether or not a shape of the object has started being deformed by tracking the object.

According to such still image extraction apparatus, it is possible to extract a moment at which deformation of an object included in a plurality of frames has started as a still image of a moment of a collision.
Moreover, the still image extraction apparatus may have a ninth configuration in which:
the extraction condition registration device is capable of registering, as the extraction condition, extraction of a time when a deformation amount of an object is greatest,
the extraction determination device, in a case where extraction of a time when a deformation amount of an object is greatest is registered as the extraction condition in the extraction condition recording unit, detects a movement of an object present in respective frames by sequentially and mutually comparing the frames along chronological order, and determines whether or not the object has been deformed and the deformation has stopped by tracking the object.

According to such still image extraction apparatus, it is possible to extract a still image at a moment at which a deformation amount of an object included in a plurality of frames has become greatest. With this configuration, it is possible to easily extract a photograph at a so-called best moment, such as a photograph at a moment when a batter hits a home run in a ballpark, from a plurality of frames.

Also, the still image extraction apparatus may have a tenth configuration which includes:
a display output device configured to sequentially output the plurality of frames to a display device; and
an external command input device configured to input a specific external command by the user,
wherein the extraction determination device determines, when a specific external command is inputted through the external command input device while the display output device outputs the plurality of frames, that a frame preceding a frame outputted at a current moment by the display output device by a predetermined number of frames depending on a response speed of the user satisfies the extraction condition.

According to such still image extraction apparatus, it is possible to extract a frame immediately preceding a moment at which the user inputs a specific external command, such as pressing an input button. The plurality of frames referred to in the present invention include a moving image reproduced after imaging and a moving image while monitoring images currently being taken.

Further, the still image extraction apparatus may have a eleventh configuration in which:
the extraction condition registration device is capable of register, as the extraction condition, a reaching to a highest reaching point, and
the extraction determination device, in a case where a reaching to a highest reaching point is registered in the extraction condition recording unit, detects a movement of an object present in respective frames by sequentially and mutually comparing the frames along chronological order, and determines whether or not the object has moved upward and afterward has stopped moving.

According to such still image extraction apparatus, it is possible to extract a still image at a moment at which an object included in a plurality of images has reached a highest reaching point. Thus, it is possible to extract, for example, a frame of a moment at which an animal jumps highest.

Moreover, the still image extraction apparatus may have a twelfth configuration in which:
the extraction device includes:
   a matching frame extraction device configured to extract a matching frame representing a frame determined to satisfy the extraction condition;
   a preceding or succeeding frame extraction device configured to extract preceding or succeeding frames representing a predetermined number of frames imaged immediately preceding or succeeding the matching frame; and
   a selective extraction device configured to extract, as the still image, a frame selected by the user from among the matching frame and preceding or succeeding frames.

According to such still image extraction apparatus, it is possible to narrow down frames suitable to be extracted by the still image extraction apparatus to several frames, and subsequently make the user select a best suited frame, and then extract the selected frame as a still image. Thus, it is possible for the user to easily select a best suited frame.

Next, a still image extraction program as a thirteenth configuration devised to achieve the aforementioned object is a program configured to cause a computer to function as respective devices constituting any one of the aforementioned still image extraction apparatuses.

According to such still image extraction program, the same effects as those in any one of the aforementioned still image extraction apparatuses may be achieved.

### BRIEF DESCRIPTION OF THE DRAWINGS

FIG. 1 is a block diagram showing a schematic configuration of an image extraction system 1 to which the present invention is applied.
FIG. 2A is a flowchart showing a former part of an extraction condition setting process executed by a microcomputer 11 in an imaging apparatus 10.
FIG. 2B is a flowchart showing a latter part of the extraction condition setting process.
FIG. 3 is a flowchart showing an exclusion condition setting process executed by the microcomputer 11 in the imaging apparatus 10.
FIG. 4A is a flowchart showing a first part of a still image extraction process executed by the microcomputer 11.
FIG. 4B is a flowchart showing a second part of the still image extraction process.
FIG. 4C is a flowchart showing a third part of the still image extraction process.
FIG. 5 is a flowchart showing an exclusion process in the still image extraction process.
FIG. 6 is a flowchart showing an upload process executed by the microcomputer 11.
FIG. 7 is a flowchart showing a manual extraction process executed by the microcomputer 11.
FIG. 8 is a flowchart showing a modified example of the extraction condition setting process.
FIG. 9A is a flowchart showing a former part of a modified example of the still image extraction process.
FIG. 9B is a flowchart showing a latter part of the modified example of the still image extraction process.
FIG. 10 is a flowchart showing an image modification process executed by the microcomputer 11.
FIG. 11 is a flowchart showing an upload process executed by the microcomputer 11.
FIG. 12 is a flowchart showing a dummy sound-link extraction process executed by the microcomputer 11.
FIG. 13 is a flowchart showing a preceding and/or succeeding frame extraction process executed by the microcomputer 11.
FIG. 14 is a flowchart showing a start timing setting process executed by the microcomputer 11.

### EXPLANATION OF REFERENCE NUMERALS

1...image extraction system, 10...imaging apparatus, 11...microcomputer, 12...imaging unit, 13...moving image recording unit, 14...communication unit, 15...condition recording unit, 16...still image recording unit, 21...operation unit, 22...display unit, 23...sound collection unit, 30...server, 40...Internet network, 50...base station, 31... extraction condition DB, 111... memory.

### MODE FOR CARRYING OUT THE INVENTION

Hereinafter, an embodiment of the present invention will be described with reference to the drawings.

### [Configuration of the Present Embodiment]

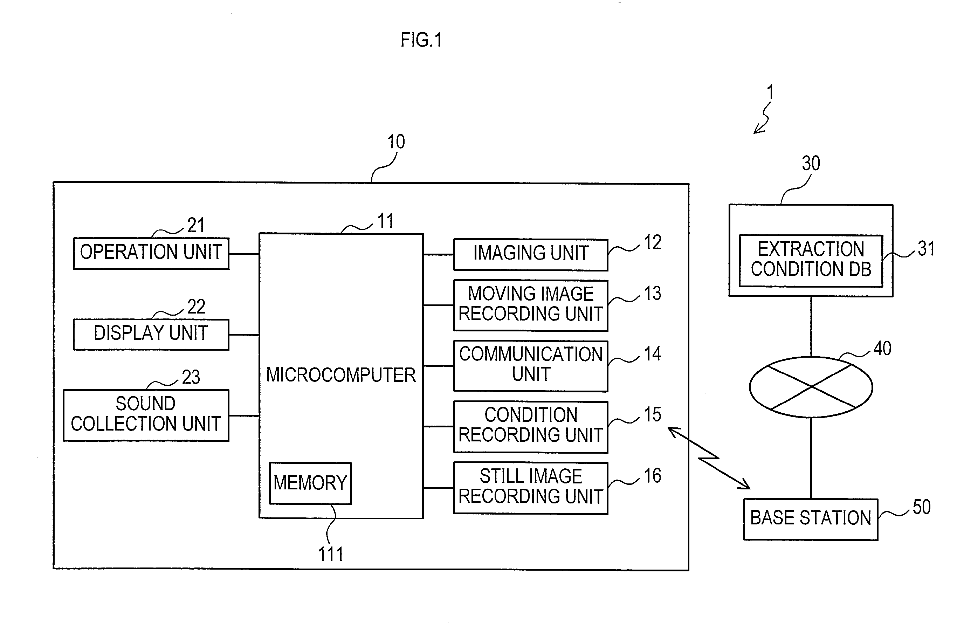

An image extraction system 1 is a system having a function of extracting a specific frame as a still image from a moving image or the like that is constituted by a plurality of frames. More specifically, as shown in FIG. 1, the system includes an imaging apparatus 10 (a still image extraction apparatus), a server 30 connected to an Internet network 40, and a base station 50 that is communicable with the server 30 through the Internet network 40 and functions as a wireless communication base station for the imaging apparatus 10.

The imaging apparatus 10 has a function as a known video camera that is capable of recording a moving image in a given format, such as an MPEG4 format. The imaging apparatus 10 also has a function of extracting a still image from a moving image. More specifically, the imaging apparatus 10 includes a microcomputer 11, an imaging unit 12, a moving image recording unit 13, a communication unit 14, a condition recording unit 15 (an extraction condition recording unit, an exclusion condition recording unit), a still image recording unit 16, an operation unit 21 (an example of an external command input device), a display unit 22, and a sound collection unit 23.

The microcomputer 11, which is configured as a known microcomputer provided with a CPU, a ROM, a RAM, etc., controls the entire imaging apparatus 10 by executing programs (such as a still image extraction program) stored in a memory 111, such as the ROM. The imaging unit 12, which is configured as a camera including a lens and an imaging device, causes the moving image recording unit 13 to record data of the taken moving image (for example, at 30 fps). The moving image recording unit 13 is configured as a known memory.

The communication unit 14 is configured as a communication module that mediates wireless communication between the imaging apparatus 10 and the base station 50. The communication unit 14 may be configured as a communication module of, for example, a wireless LAN or a mobile phone, although a communication protocol thereof may be optionally employed.

The condition recording unit 15 is configured as a memory to record various conditions for extracting a still image from a moving image. The still image recording unit 16 is configured as a memory to record an extracted still image. The recording units 13, 15, and 16 may be configured as physically separate memories, or may be configured as areas of physically one memory such that the areas are used in a divided manner depending on respective functions.

The operation unit 21 is configured as an interface for a user to input a command to the imaging apparatus 10. Specifically, the operation unit 21 is configured as a plurality of buttons, a touch panel, and others.

Here, the imaging apparatus 10 (the microcomputer 11) is configured to be capable of switching among, and performing, a plurality of operation modes in accordance with an input through the operation unit 21. More specifically, the imaging apparatus 10 is configured to be capable of switching among a video recording mode to record a moving image using the imaging unit 12, a reproducing mode to reproduce a moving image or a still image recorded in the moving image recording unit 13 or the still image recording unit 16, a condition setting mode to set an extraction condition to extract a still image from a moving image, a still image extraction mode to extract a still image from a moving image, and a transmission mode to transmit externally an extraction condition or a still image.

Next, the display unit 22 is configured as a liquid crystal color display or an organic EL display. On the display unit 22, an image in accordance with a command from the microcomputer 11 is displayed (for example, when recording a moving image using the imaging unit 12, the moving image to be recorded is displayed, while when reproducing a moving image or a still image recorded in the moving image recording unit 13 or the still image recording unit 16, the moving image or still image being reproduced is displayed).

The sound collection unit 23, which is configured as a known microphone, transmits a detected sound wave signal to the microcomputer 11. Next, the server 30 is configured to be connectable to a multiple of imaging apparatuses 10 through the Internet network 40 and the base station 50, and is also configured to be capable of retrieving setting details of the respective imaging apparatuses 10.

The setting details are stored in an extraction condition database (DB) 31 in the server 30. Also, each of the imaging apparatuses 10 is configured to be capable of retrieving the setting details of the other imaging apparatuses 10 stored in the extraction condition DB 31 and setting details prepared by the server 30 in the condition setting mode or the like.

### [Process in the Present Embodiment]

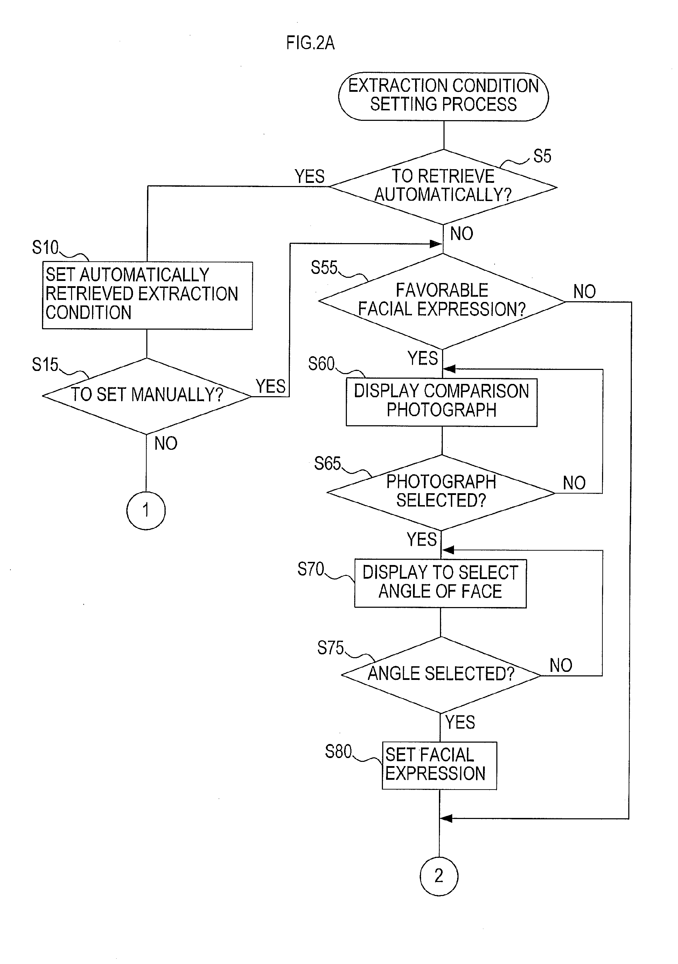

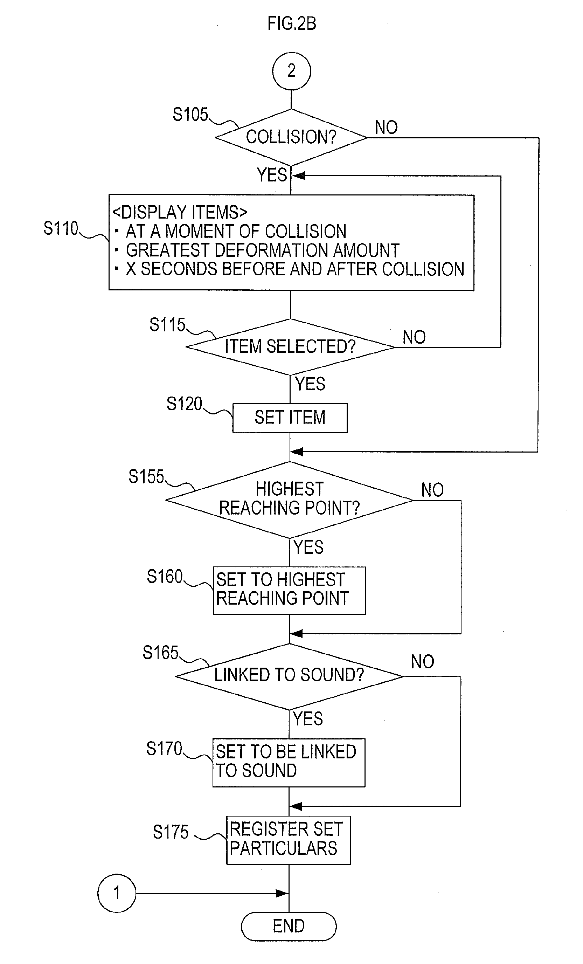

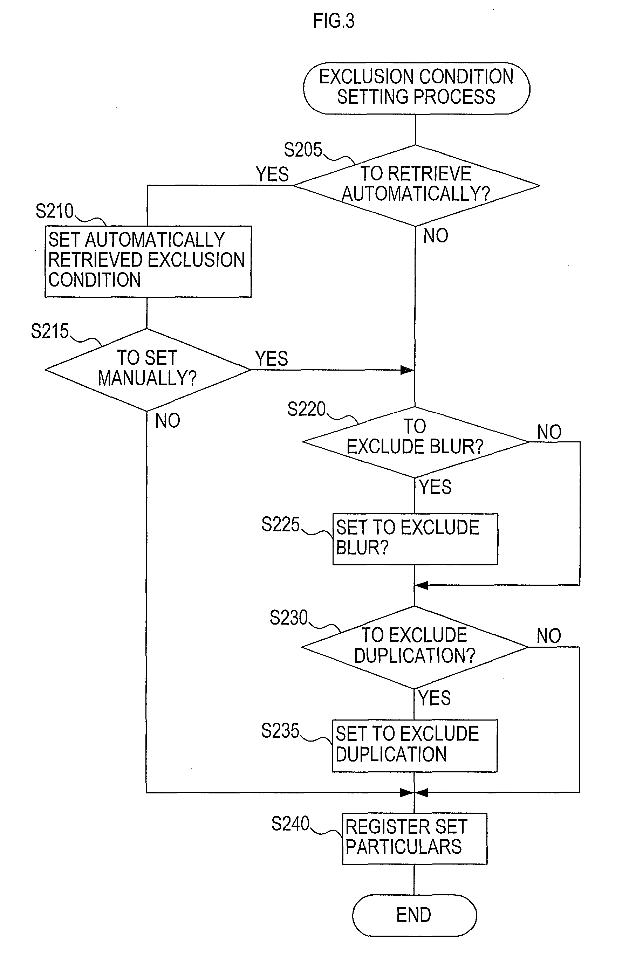

The above described imaging apparatus 10 executes a process of setting a condition for extracting a still image from a moving image and a process of extracting the still image from the moving image in accordance with the set condition. First, a description will be provided of the process of setting a condition for extracting a still image from a moving image with reference to FIGS. 2A, 2B and 3.

An extraction condition as a condition to extract a still image from a moving image is set in an extraction condition setting process (FIGS. 2A and 2B), while an exclusion condition as a condition not to extract a still image from a moving image even if the extraction condition is satisfied is set in an exclusion condition setting process (FIG. 3).

Each of the extraction condition setting process and the exclusion condition setting process is started when the imaging apparatus 10 is set to the condition setting mode through the operation unit 21, and is repeatedly executed until the mode is switched from the condition setting mode to another mode. In the extraction condition setting process, it is first determined whether or not it is set to retrieve an extraction condition from the server 30 (S5). Here, it is premised that whether or not to retrieve an extraction condition from the server 30 is previously set by an operation through the operation unit 21.

When it is set to retrieve an extraction condition from the server 30 (S5: YES), the extraction condition is retrieved from the server 30, and then the retrieved extraction condition is set (S10: an example of an extraction condition retrieving device). When receiving a request for an extraction condition from the imaging apparatus 10, the server 30 sends the extraction condition to the imaging apparatus 10 as a requestor. In this case, it may be configured such that the server 30 sends all of currently held extraction conditions and an extraction condition to be set is selected by the imaging apparatus 10. Alternatively, it may be configured such that the server 30 presents a plurality of currently held extraction conditions (or still images corresponding to the extraction conditions) to the imaging apparatus 10 in a selectable manner, and sends to the imaging apparatus 10 only an extraction condition selected by the imaging apparatus 10.

In a process of S10, extraction conditions to be set in later-described processes in S55 to S170 are retrieved and set. The term "set" here does not mean fixing extraction conditions, but means temporarily recording extraction conditions in a memory, such as a RAM. Once registered in a later-described process of S175, the set extraction conditions are fixed.

Subsequently, it is determined whether or not it has been inputted to manually set an extraction condition through the operation unit 21 (S15). If it has not been inputted to manually set an extraction condition (S15: NO), the present process proceeds to the later-described process of S175.

If it has been inputted to manually set an extraction condition (S15: YES), or if it is determined in the process in S5 that it is set to retrieve an extraction condition from the server 30 (S5: YES), the extraction condition is manually set by executing processes from S55 onward.

Specifically, it is first determined whether or not it is set to extract a still image of a user's favorite facial expression (a favorable facial expression) (S55). If it is not set to extract a still image of a user's favorite facial expression (S55: NO), the present process proceeds to a later-described process of S105.

If it is set to extract a still image of a user's favorite facial expression (S55: YES), a still image (comparison photograph) recorded in the still image recording unit 16 is displayed on the display unit 22 in order for the user to select a photograph with a favorable facial expression (S60). It is configured such that the user can retrieve a still image (comparison photograph) inputted from a not-shown interface by operating the operation unit 21, and previously register the still image in the still image recording unit 16.

Subsequently, it is determined whether or not a still image has been selected through the operation unit 21 (S65). If a still image has not been selected (S65: NO), the present process returns to the process of S60. If a still image has been selected (S65: YES), an image to select an angle of a face is displayed on the display unit 22 (S70). Then, it is determined whether or not the angle of the face has been selected through the operation unit 21 (S75).

Selection of the angle of the face here is intended to allow changes in the angle of the face if the selected still image has a favorable facial expression but has an unfavorable angle. Specifically, indications, such as "Right +10 degrees" and "Down +15 degrees", as well as faces (photographed faces or faces of a character as a model) at corresponding angles are displayed on the display unit 22, to thereby allow the user to select a favorite angle.

If the angle of the face has not been selected (S75: NO), the present process returns to a process of S70. If the angle of the face has been selected (S75: YES), features of the facial expression and the selected angle of the face in the selected still image are set (S80). The features of the facial expression mean information on positional relationships among, sizes of, distances among, parts of the face, etc.

Subsequently, it is determined whether or not it is set, as an extraction condition, to extract collision of an object included in a moving image by the user's operation of the operation unit 21 (S105). If it is not set to extract collision of an object (S105: NO), the present process proceeds to a later-described process of S155. If it is set to extract collision of an object (S105: YES), an image showing items is displayed on the display unit 22 (S110).

The image is displayed to select from among specific items of extraction at a moment of collision of the object, extraction at the moment of a greatest deformation amount after the collision, and extraction at a predetermined time before and after the collision.

Then, it is determined whether or not the user has selected an item through the operation unit 21 (S115). If the user has not selected an item (S115: NO), the present process returns to the process of S110. If the user has selected an item (S115: YES), the selected item is set (S155).

Subsequently, it is determined whether or not it is set, as an extraction condition, by the user's operation of the operation unit 21 to extract a moment at which the object included in the moving image has reached a highest reaching point (S155). If the moment at which the object has reached the highest reaching point is not to be extracted (S155: NO), the present process proceeds to a later-described process of S165.

If the moment at which the object has reached the highest reaching point is to be extracted (S155: YES), it is set to extract the moment at which the object has reached the highest reaching point (S160). Subsequently, it is determined whether or not it is set by the user's operation of the operation unit 21 to extract a moment at which a sound is detected (i.e., a frame linked to the sound) (S165).

If the moment at which a sound is detected is not to be extracted (S165: NO), the present process proceeds to a later-described process of S175. If the moment at which a sound is detected is to be extracted (S165: YES), it is set to extract the moment at which a sound is detected (S170). Then, set particulars are registered in the condition recording unit 15 (S175: an example of an extraction condition registration device), and the extraction condition setting process is terminated.

Next, a description will be provided of the exclusion condition setting process with reference to FIG. 3. In the exclusion condition setting process, it is first determined whether or not it is set to retrieve an exclusion condition from the server 30 (S205). It is premised that whether or not to retrieve the exclusion condition from the server 30 is previously set by operation through the operation unit 21.

If it is set to retrieve the exclusion condition from the server 30 (S205: YES), the exclusion condition is retrieved from the server 30 in a same manner as in the case of retrieving the extraction condition, and the retrieved exclusion condition is set (S210). In a same manner as in the case of the extraction conditions, the exclusion conditions as indicated in later-described S220 to S235 are set. Also, once registered in a later-described process of S240, the set exclusion conditions are fixed.

Subsequently, it is determined whether or not it has been inputted to manually set an exclusion condition through the operation unit 21 (S215). If it has not been inputted to manually set an exclusion condition (S215: NO), the present process proceeds to the later-described process of S240.

If it has been inputted to manually set an exclusion condition (S215: YES), or if it is determined in the process of S205 that it is set to retrieve an exclusion condition from the server 30 (S205: YES), the exclusion condition is manually set by executing processes from S220 onward.

Specifically, it is first determined whether or not it has been set by the user's operation of the operation unit 21 to exclude a frame with blur, which means presence of an defocused object or a vaguely-outlined object in the frame (S220). If a frame with blur is not to be excluded (S220: NO), the present process proceeds to a later-described process of S230.

If a frame with blur is to be excluded (S220: YES), it is set to exclude a frame with blur (S225). Subsequently, it is determined whether or not it has been set by the user's operation of the operation unit 21 to exclude a duplicate still image (a similar still image) (S230).

If a duplicate still image is not to be excluded (S230: NO), the present process proceeds to the process of S240. If a duplicate still image is to be excluded (S230: YES), it is set to exclude a duplicate still image (S235). Then, set particulars are registered in the condition recording unit 15 (S240: an example of an exclusion condition registration device), and the exclusion condition setting process is terminated.

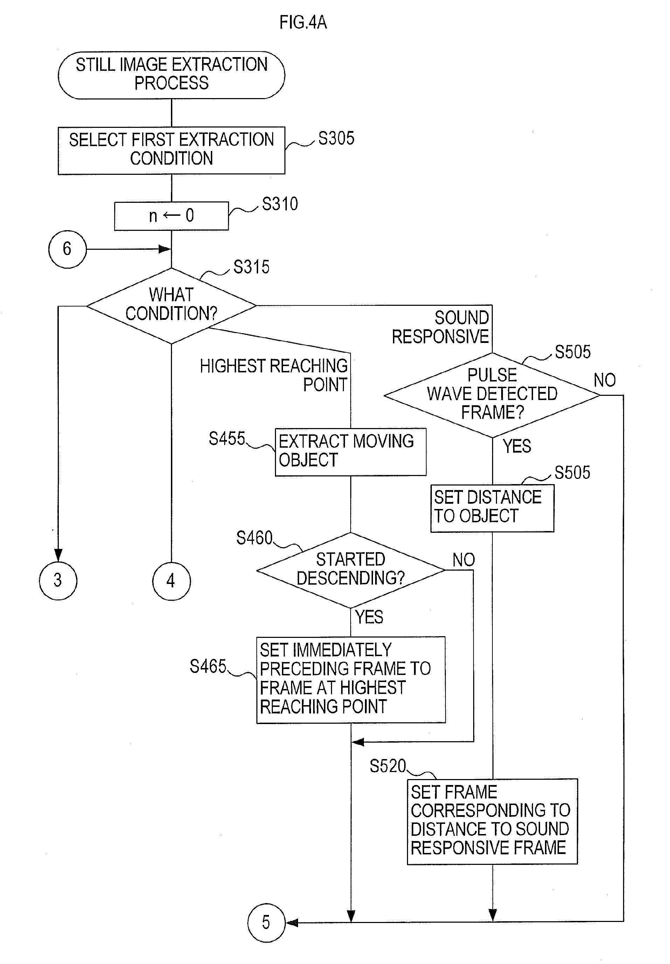

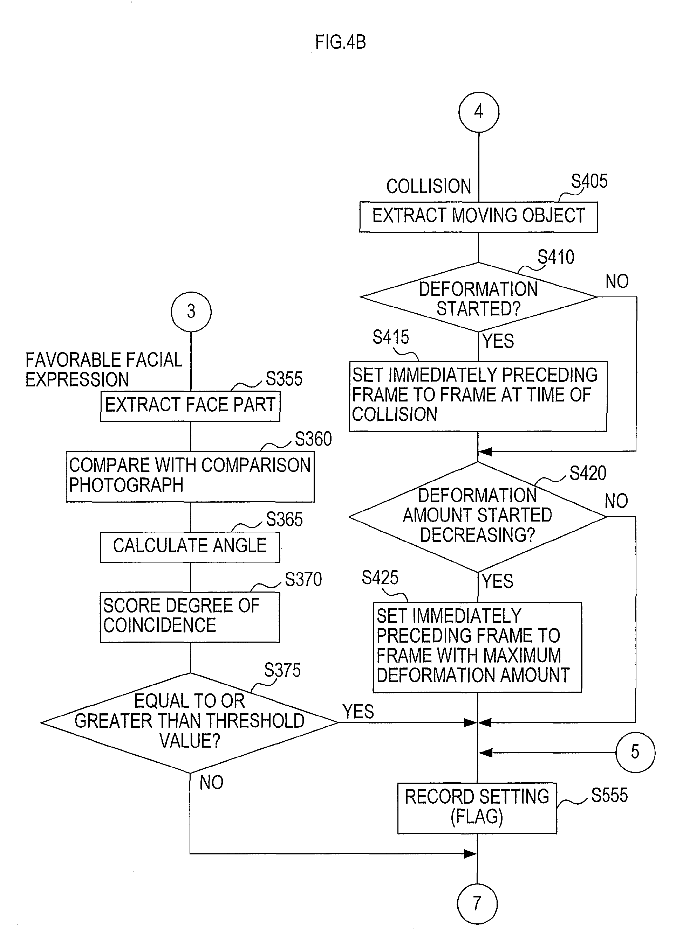

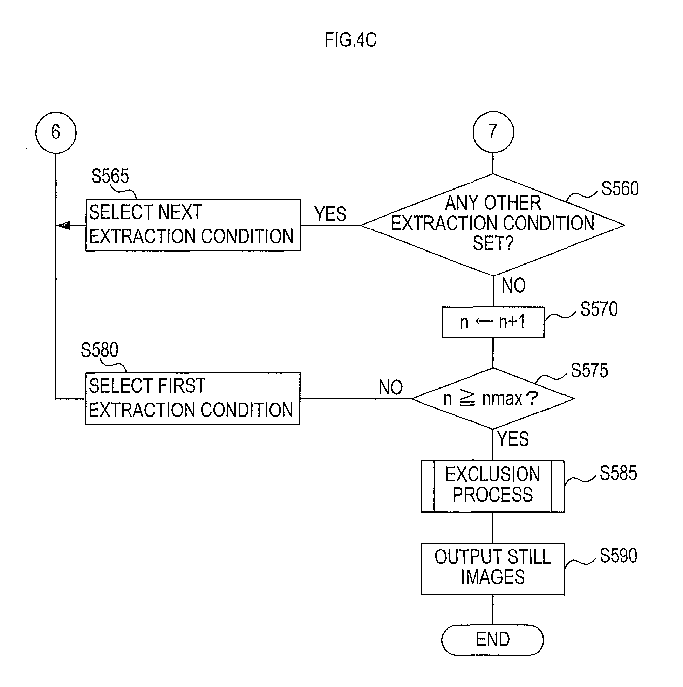

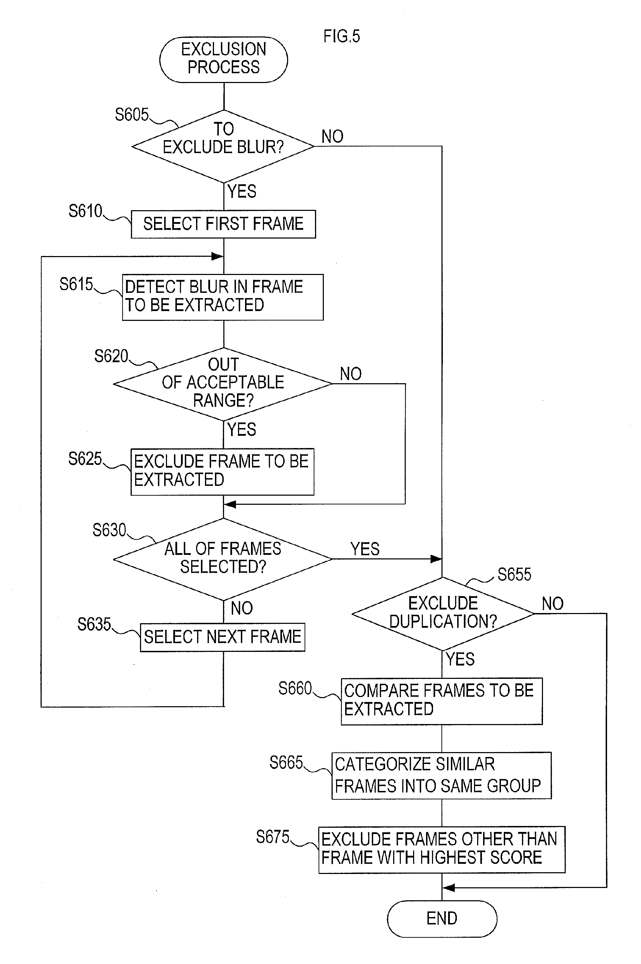

Next, a description will be provided of a still image extraction process for extracting a specified frame (still image) from a moving image in accordance with a set condition with reference to FIGS. 4A, 4B, 4C, and 5 (an exclusion process).
Processes from S355 to S520 in the still image extraction process correspond to an example of an extraction determination device according to the present invention. Processes of S620, S655, and S665 to S675 in the exclusion process correspond to an example of an exclusion determination device according to the present invention.

The still image extraction process is a process to be started when the user sets the imaging apparatus 10 to the still image extraction mode through the operation unit 21, and also a moving image from which a still image is to be extracted is selected. In the still image extraction process, as shown in FIG. 4, a first extraction condition among the registered extraction conditions is first selected (S305).

Then, a (n=0)th frame, that is, the first frame constituting the moving image is selected (S310). Subsequently, it is determined what condition the selected extraction condition is (S315).
In a case where the extraction condition is to extract a still image of the user's favorite facial expression (a favorable facial expression) (S315: FAVORABLE FACIAL EXPRESSION), a face part in the currently selected frame is extracted by means of a well-known image processing (S355), a comparison is made with a registered comparison photograph (S360), and calculation of a face angle (an angle relative to a reference direction (such as a front direction)) is made (S365).

Then, a degree of coincidence of facial expression and a degree of coincidence of angle with the comparison photograph are scored, and a score of degree of coincidence is calculated (S370). Here, the face angle can be detected by specifying positions of parts of a face by means of a well-known image processing technique.

Subsequently, a comparison is made between a threshold value set to a score, at which it can be recognized that the comparison photograph and a photograph in the frame have generally the same facial expression and also a direction of the face is as specified, and the score of degree of coincidence (S375). If the score of degree of coincidence is equal to or greater than the threshold value (S375: YES), the present process proceeds to a later-described process of S555. Also, if the score of degree of coincidence is less than the threshold value (S375: NO), the present process proceeds to a later-described process of S560.

When it is determined in the process of S315 that the extraction condition is to extract a collision of an object included in the moving image (S315: COLLISION), a moving object (and a still object) is extracted from the frame (S405). In this process, an object included in the selected frame is extracted, and also a position of the object in an already selected frame is detected, to thereby determine whether or not the object is a moving object. Accordingly, a moving object is not extracted in a frame immediately after starting the moving image.

Subsequently, it is determined whether or not deformation of the moving object has started (S410). Here, deformation of the moving object means deformation caused by a collision of the moving object with another object (another moving object or still object), and any deformation not caused by a collision, such as deformation caused by a change in direction of seeing the moving object, is excluded.

That is, it is determined in this process whether or not there is a deformation by a collision by monitoring a positional relationship between the moving object and another object as well as a shape of the moving object over a plurality of frames. If a moving object is not extracted in the process of S405, a negative determination is made in each determination process after extraction of a moving object.

If deformation of the moving object has not started (S410: NO), the present process proceeds to a later-described process of S420. If deformation of the moving object has started (S410: YES), an immediately preceding frame of a frame in which a start of the deformation is detected is set to a frame at the time of collision (S415). This is because the frame in which the collision is actually detected is a frame after the collision, and it is presumable that the immediately preceding frame is the frame at the time of collision (the same is applicable in later-described processes of S425 and S465).

Subsequently, a deformation amount due to the collision regarding the moving object is compared with a past frame to determine whether or not the deformation amount has started decreasing in the current frame (S420). That is, it is determined whether or not the deformation has started by the collision, and then the deformation amount has become maximum, and afterward the deformation has started restoration.

If the deformation amount has not started decreasing (S420: NO), the present process proceeds to a later-described process of S555. If the deformation amount has started decreasing (S420: YES), an immediately preceding frame of a frame in which a start of the decrease in the deformation amount is detected is set to a frame with a maximum deformation amount (S425).

When it is determined in S315 that the extraction condition is to extract a moment when an object included in the moving image has reached a highest reaching point (315: HIGHEST REACHING POINT), a moving object (and a still object) is extracted in a same manner as in the process of S405 (S455), and then it is determined whether or not the moving object has started descending (S460). In this process, it is determined whether or not a current frame is a frame at a moment when the moving object that has moved upward and stopped for a moment has started descending, as in a case where the moving object is making a jump. Specifically, a behavior of the moving object is detected in a past frame, and it is detected that the moving object in an upward movement has started a downward movement.

If the moving object has not started descending in the current frame (S460: NO), the present process proceeds to a later-described process of S555. If the moving object has started descending in the current frame (S460: YES), an immediately preceding frame of a frame in which a start of descending of the moving object is detected is set to a frame at the moment in which the moving object is at the highest reaching point (S465).

When it is determined in the process of S315 that the extraction condition is to extract a moment when a sound is detected (S315: SOUND RESPONSIVE), it is determined whether or not a pulse wave indicating a sound wave of, for example, a collision sound or an explosion sound is detected through the sound collection unit 23 during recording of the current frame (S505). If a pulse wave is not detected (S505: NO), the present process proceeds to the process of S555.

If a pulse wave is detected (S505), a distance to a major object among objects existing in the current frame (for example, an object having a greatest proportion of surface area in the frame, a moving object that has changed its speed, or the like) is detected and set. When detecting the distance, a detection result by means of an infrared or radar device provided in the imaging apparatus 10 may be used, or a detection result by means of an external distance measuring device may be used. Alternatively, in a case where the imaging apparatus 10 is configured as a stereo camera, the distance to the object may be detected by means of image processing. In a case where the imaging apparatus 10 is fixedly arranged on a road, or the like, it may be possible to previously record, in the imaging apparatus 10, a relationship between a position and the distance of the object in the frame, and to use this recorded information.

Then, a frame preceding by a number of frames corresponding to a time obtained by dividing the distance by a sonic speed is set to a sound responsive frame (S520), and the present process proceeds to the process of S555. The process of S520 is configured to specify the moment when a sound is produced.

Subsequently, the frame with respect to which a setting is made in any of the above-described processes is affixed with a flag depending on a type of the setting (a flag indicating that the frame is to be extracted as a still image) (S555: an example of an extraction device). For example, the frame set to the frame at the time of collision is affixed with a flag indicating the frame at the time of collision.

Then, it is determined whether or not any extraction condition other than the currently selected extraction condition is set (S560). If any other extraction condition is set (S560: YES), a next not yet selected extraction condition is selected (S565), and the processes from S315 onward are executed.

If no other extraction condition is set (S560: NO), a frame number n is incremented (that is, a next frame is selected) (S570). Then, it is determined whether or not the frame number n is equal to or more than a number of frames (nmax) constituting the moving image (i.e., whether or not a last frame of the moving image has been selected) (S575).

If the frame number n is less than the number of frames constituting the moving image (S575: NO), a first extraction condition is again selected (S580), and the processes from S315 onward are executed. If the frame number n is equal to or more than the number of frames constituting the moving image (S575: YES), an exclusion process is executed (S585).

In the exclusion process, it is determined whether or not it is set to exclude a frame with blur as shown in FIG. 5 (S605). If it is not set to exclude a frame with blur (S605: NO), the present process proceeds to a process of S655. If it is set to exclude a frame with blur (S605: YES), a first frame (for example, a frame to which a flag is first affixed) among frames (frames to be extracted), each of which is affixed with a flag indicating that the frame is to be extracted, is selected (S610).

Then, a degree of blur in the selected frame to be extracted is detected (S615). Here, the degree of blur means a value obtained by quantifying a degree of being in focus, clearness of a contour (an edge), etc. by means of image processing. Subsequently, it is determined whether or not the obtained value is within an acceptable range (S620).

Whether or not the value is within the acceptable range may be identified by determining whether or not the value is equal to or more than a predetermined threshold value (a value of a degree that most people feel a still image is clear). If the value is out of the acceptable range (i.e., if the still image is not clear) (S620: YES), a flag affixed to the selected frame and indicating that the frame is to be extracted as a still image is removed, to thereby exclude the frame from extraction targets (S625: an example of an extraction inhibition device).

If the value is within the acceptable range (S620: NO), a flag affixed to the selected frame and indicating that the frame is to be extracted as a still image is not removed, and the present process proceeds to a process of S630. Subsequently, it is determined whether or not all of the frames to be extracted (frames each affixed with a flag indicating that the frame is to be extracted) have been selected (S630).

If all of the frames to be extracted have not been selected (S630: NO), a next frame to be extracted is selected (S635), and the present process returns to the process of S615. If all of the frames to be extracted have been selected (S630: YES), the present process proceeds to a process of S655.

Next, it is determined whether or not it is set to exclude a duplicate still image (S655). If it is not set to exclude a duplicate still image (S655: NO), the extraction process is terminated. If it is set to exclude a duplicate still image (S655: YES), the frames to be extracted are mutually compared (S660) and divided into groups in accordance with an entire similarity or with a similarity in background behind an object (S665). In this process, frames having a specific proportion or more of coincidence in arrangement of pixels (color and brightness) over each entire frame or in arrangement of pixels in each background are categorized into a same group as mutually similar frames. Also, frames that are similar only to the similar frames may be categorized into the same group.

With respect to the scored frames in the same group (the frames on which the process of S370 has been performed), the flag indicating to extract as a still image is removed from frames other than the frame with the highest score in the group to thereby exclude the frames from extraction targets (S675: an example of an extraction inhibition device), the exclusion process is terminated.

When such exclusion process is terminated, the frames affixed with the flags indicating to extract are extracted as still images, and these frames are recorded in the still image recording unit 16 (S590: an example of the extraction device), and the still image extraction process is terminated.

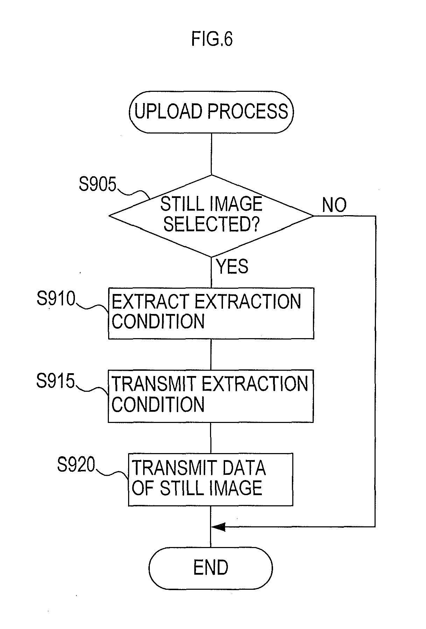

Next, a description will be provided, with reference to FIG. 6, of a process by the imaging apparatus 10 to upload to the server 30 extraction conditions (including the exclusion condition) along with photographs.
The upload process is started when the imaging apparatus 10 is set to a transmission mode, and is repeatedly executed thereafter until the mode is changed to another mode. In the upload process, it is first determined whether or not a user has selected an extracted still image (a photograph) through the operation unit 21, as shown in FIG. 6 (S905).

If a still image has not been selected (S905: NO), the upload process is terminated. If a still image has been selected (S905: YES), the extraction condition (including the exclusion condition) at the time of extracting the still image is extracted based on the flag affixed to the still image (S910). Then, the extraction condition and data of the still image are transmitted to the server 30 (S915: an example of an extraction condition transmission device, S920), and the upload process is terminated. The server 30 causes an extraction condition DB 31 to record the still image and the extraction condition uploaded by the imaging apparatus 10 along with information to specify the imaging apparatus 10.

According to the above-described upload process, in which the still image and the extraction condition are transmitted to the server 30, another user who looks at the still image recorded at the server 30 and wants to take a similar still image may select the still image to thereby retrieve the extraction condition and set the extraction condition to take a similar still image at the user's own imaging apparatus 10.

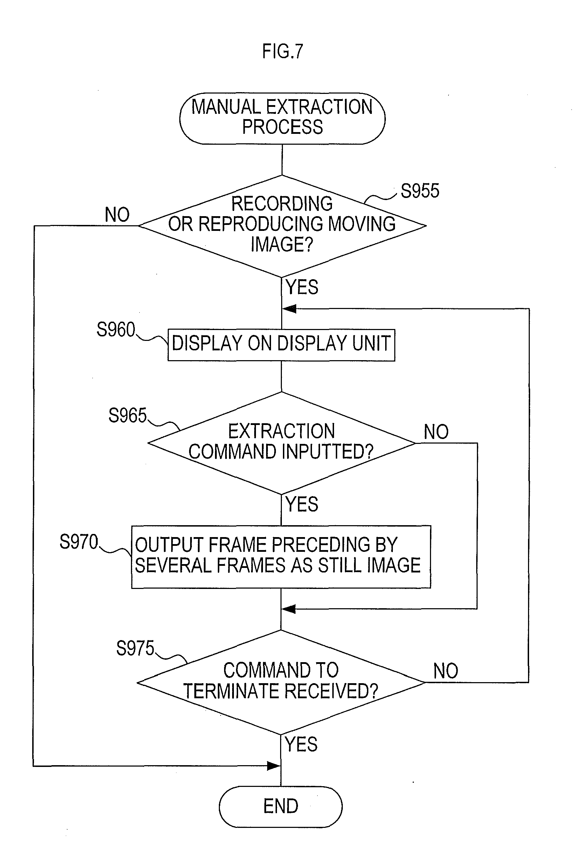

Next, a description will be provided of a process in a case where a user optionally selects a timing of extracting a still image with reference to FIG. 7.
A manual extraction process is a process in which, when a user inputs an extraction command to the imaging apparatus 10, a still image is extracted at the timing regardless of the extraction condition described above. The manual extraction process is started when the imaging apparatus 10 is set to a video recording mode or a reproducing mode, and is repeatedly executed until the set mode is changed to another mode.

More specifically, in the manual extraction process, it is first determined whether or not the imaging apparatus 10 is recording or reproducing a moving image (S955). If the imaging apparatus 10 is not recording or reproducing a moving image (S955: NO), the manual extraction process is terminated.

If the imaging apparatus 10 is recording or reproducing a moving image (S955: YES), the moving image during recording or the moving image during reproducing is displayed on the display unit 22 (S960: an example of a display output device). Subsequently, it is determined whether or not an extraction command has been inputted (S965: an example of an extraction determination device). In this process, it is determined whether or not the user has performed a specific operation to operate the operation unit 21, such as an operation of pressing a shutter button.

If an extraction command has not been inputted (S965: NO), the present process proceeds to a later-described process of S975. If an extraction command has been inputted (S965: YES), a frame preceding the current frame by several frames (for example, preceding by five frames) is extracted as a still image, and is recorded in the still image recording unit 16 (S970). Here, it may be configured such that the user may optionally set how far the frame to be extracted should precede a moment of input of the extraction command. That is, in order to extract a still image at a moment when the user thinks "Now" while watching a moving image, a time lag from the moment when the user thinks "Now" to a moment when the operation unit 21 is actually operated is considered, and a frame that precedes by the time lag is extracted.

Subsequently, it is determined whether or not a command to terminate recording or reproducing has been received (S975: an example of an extraction determination device). To terminate recording or reproducing means, for example, a case where the user inputs a stop command through the operation unit 21 or a case where reproduction of the moving image is finished.

If a command to terminate has not been received (S975: NO), the present process returns to the process of S960. If a command to terminate has been received (S975: YES), the manual extraction process is terminated.

### [Effects of the Present Embodiment]

In the image extraction system 1 as detailed above, the microcomputer 11 of the imaging apparatus 10 registers an extraction condition to extract a still image specified by a user of the imaging apparatus 10 in the condition recording unit 15, and determines in a frame-by-frame manner whether or not the plurality of frames satisfy the extraction condition registered in the condition recording unit 15. Then, the microcomputer 11 extracts the frame that is determined to satisfy the extraction condition as a still image.

According to the imaging apparatus 10, it is possible to extract a still image from a moving image in accordance with the extraction condition specified by the user. It is, therefore, possible to extract a still image required by the user.
Also, in the imaging apparatus 10, the microcomputer 11 registers an exclusion condition specified by the user of the imaging apparatus 10 and indicating a condition for not extracting a still image in the condition recording unit 15, and determines in a frame-by-frame manner whether or not the plurality of frames satisfy the exclusion condition registered in the condition recording unit 15. Then, the microcomputer 11 inhibits extraction of the frame that is determined to satisfy the exclusion condition among the frames that are determined to satisfy the extraction condition.

According to the imaging apparatus 10 as above, it is possible not to extract a frame that satisfies the exclusion condition even when the frame satisfies the extraction condition. Thus, it is possible to suppress extraction of an unnecessary frame.

Also, the microcomputer 11 in the imaging apparatus 10 retrieves an extraction condition from the server that is located outside the imaging apparatus 10 and stores extraction conditions for extracting a still image.
According to the imaging apparatus 10 as above, a condition to extract a favorite still image can be retrieved from the server. Thus, it is possible for anyone to easily set a moment for taking a still image.

Furthermore, the microcomputer 11 in the imaging apparatus 10 transmits the extraction condition recorded in the condition recording unit 15 to the server that stores the extraction conditions for extracting a still image and also stores, when receiving an extraction condition from outside, the received extraction condition.

According to the imaging apparatus 10 as above, since an extraction condition set by a user is transmitted to the server, it is possible to share the extraction condition with other imaging apparatuses 10.
Also, in the imaging apparatus 10, the microcomputer 11 is capable of registering, as an exclusion condition, inhibition of extraction of a similar still image. When inhibition of extraction of a similar still image is registered as an exclusion condition in the condition recording unit 15, the microcomputer 11 categorizes the plurality of frames into groups each consisting of similar frames, determines whether or not two or more frames are present in each of the groups, and inhibits extraction of two or more frames from the each of the groups.

According to the imaging apparatus 10 configured as above, it is possible to suppress extraction of a plurality of similar still images. Thus, it is possible to save costs when printing the extracted still image and to reduce difficulty in selecting the still image to be printed.

Further, in the imaging apparatus 10, the microcomputer 11 extracts a frame that most satisfies the extraction condition from each of the groups.
According to the imaging apparatus 10 configured as above, it is possible to extract only a most suited frame desired by the user.

Moreover, in the imaging apparatus 10, the microcomputer 11 is capable of registering, as the extraction condition, a face photograph of a specific person as well as extraction of a frame including a face that is similar to the face photograph. In a case where extraction of a frame including a face that is similar to the face photograph is registered as the extraction condition in the condition recording unit 15, the microcomputer 11 determines whether or not a face included in each of the frames is similar to the face photograph recorded in the condition recording unit 15.

According to the imaging apparatus 10 configured as above, it is possible to register a face photograph with a facial expression to be extracted, and to extract a frame including a face with a facial expression similar to the face photograph. Thus, it is possible to easily extract a still image with the user's favorite facial expression.

Moreover, in the imaging apparatus 10, the microcomputer 11 is capable of registering, as the extraction condition, extraction of a moment of a collision of an object. In a case where extraction of a moment of a collision of an object is registered as the extraction condition in the condition recording unit 15, the microcomputer 11 detects a movement of an object present in frames by sequentially and mutually comparing the respective frames along chronological order and determines whether or not a shape of the object has started being deformed by tracking the object.

According to the imaging apparatus 10 configured as above, it is possible to extract a moment at which deformation of an object included in a moving image has started as a still image of a moment of a collision.
In addition, in the imaging apparatus 10, the microcomputer 11 is capable of registering, as the extraction condition, extraction of a time when a deformation amount of an object is greatest. In a case where extraction of a time when a deformation amount of an object is greatest is registered as the extraction condition in the condition recording unit 15, the microcomputer 11 detects a movement of an object present in frames by sequentially and mutually comparing the respective frames along chronological order, and determines whether or not the object has been deformed and the deformation has stopped by tracking the object.

According to the imaging apparatus 10 configured as above, it is possible to extract a still image at a moment at which a deformation amount of an object included in a moving image has become greatest. With this configuration, it is possible to easily extract a photograph at a so-called best moment, such as a photograph at a moment when a batter hits a home run in a ballpark, from a moving image.

Further, in the imaging apparatus 10, the microcomputer 11 has a function of outputting a moving image to a display unit. When a specific external command is inputted by the user while outputting a moving image to the display unit, the microcomputer 11 determines that a frame preceding a currently outputted frame by a predetermined number of frames depending on a response speed of the user satisfies the extraction condition.

According to the imaging apparatus 10 configured as above, it is possible to extract a frame immediately preceding a moment at which the user inputs a specific external command, such as pressing an input button.
Further, in the imaging apparatus 10, the microcomputer 11 is capable of register, as the extraction condition, a reaching to a highest reaching point. In a case where a reaching to a highest reaching point is registered in the condition recording unit 15, the microcomputer 11 detects a movement of an object present in frames by sequentially and mutually comparing the respective frames along chronological order, and determines whether or not the object has moved upward and afterward has stopped moving.

According to the imaging apparatus 10 configured as above, it is possible to extract a still image at a moment at which an object included in a moving image has reached a highest reaching point. Thus, it is possible to extract, for example, a frame of a moment at which an animal jumps highest.

### [Other Embodiments]

Embodiments of the present invention should not at all be limited to the above described embodiment, but may be in various forms within the technical scope of the present invention.

For example, it is configured in the above embodiment to extract a still image of a moment at which a collision is detected or a still image preceding or succeeding the moment. However, for example, in a case where the imaging apparatus 10 is posted at an intersection, it may be configured to extract a still image of not only a moment of a collision but also a moment of a signal color change before the collision or a moment at which a moving object has passed a predetermined position (a stop line or the like).

Also, the imaging apparatus 10, which is configured as a video camera, may be configured as a cell-phone handset provided with an audio output device, such as a loudspeaker, a headphone terminal, etc.
Further, in the above described imaging apparatus 10, a reaching to a highest reaching point of a moving object is determined by detecting a change in moving direction of the moving object from upward to downward. However, it may be configured to extract a frame at which there is a change in moving direction of the moving object to an arbitrary direction instead of a frame of a highest reaching point. For example, it may be configured to detect a stopping or a leftward return of a rightward moving object, or a stopping or an upward return of a downward moving object, and to extract a frame at such a moment of detection.

Moreover, while the above described configuration is such that a frame at a moment of a collision, a frame at a moment of sound production, or the like is extracted, it may be configured such that a frame at a moment of a change in hue or light intensity, such as a case of illumination or explosion.

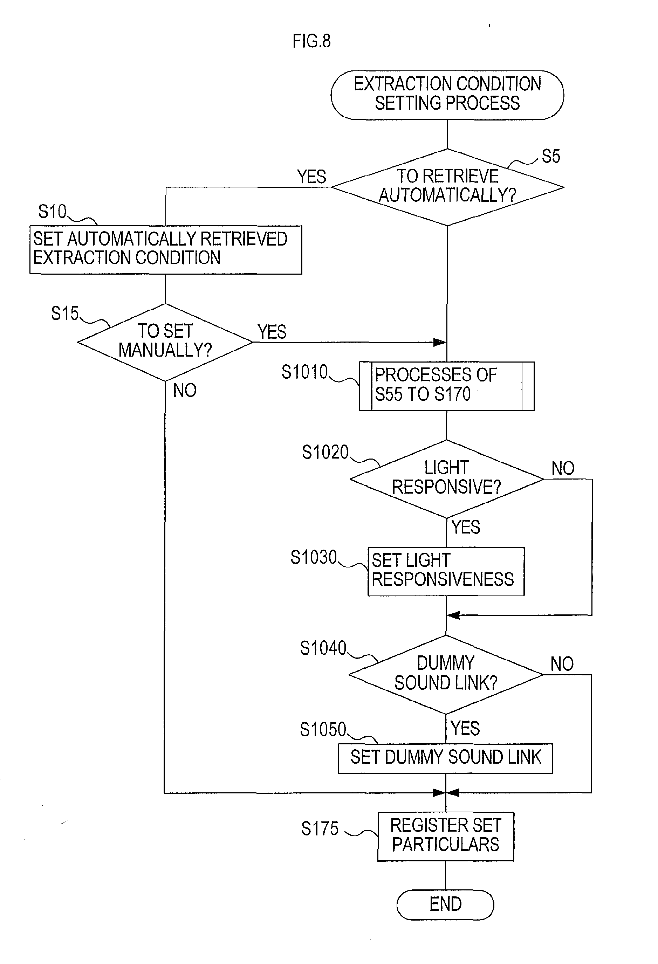

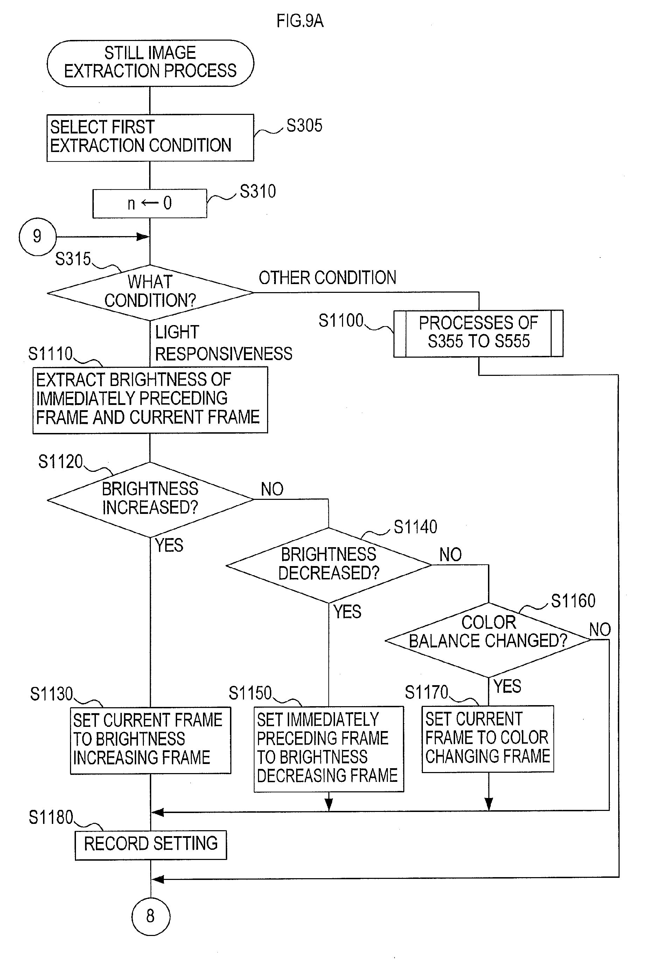

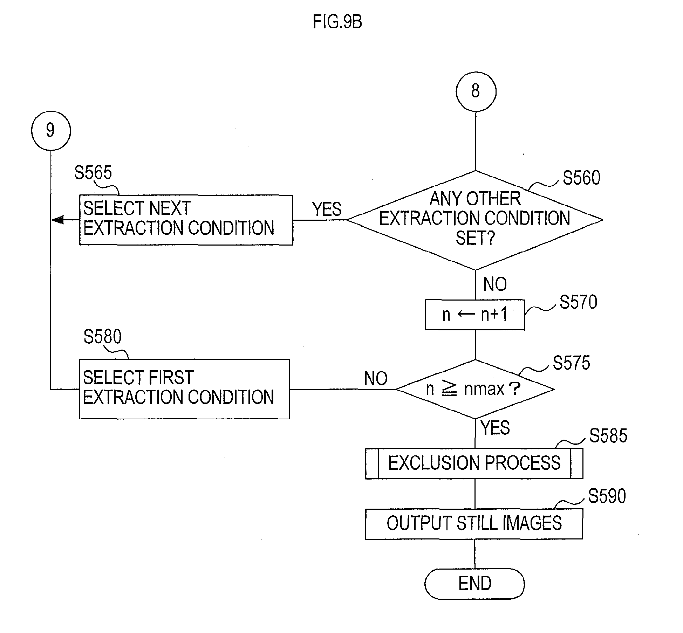

In this case, for example, a modified example of the extraction condition setting process shown in FIG. 8 and a modified example of the still image extraction process shown in FIGS. 9A and 9B may be executed. In the modified example of the extraction condition setting process, as shown in FIG. 8, it is determined (S1020) after the aforementioned processes of S55 to S170 (S1010) whether or not light responsiveness, which means extraction of a frame corresponding to a change in hue or light intensity, is selected.

If light responsiveness is selected (S1020), it is set to extract a frame related to light responsiveness (S1030), and the present process proceeds to a process of S175. Also, in the modified example of the still image extraction process, as shown in FIGS. 9A and 9B, if it is determined in S315 that any of the conditions shown in FIGS. 4A, 4B, and 4C is set as the extraction condition (S315: other condition), the aforementioned processes in S355 to S555 are executed depending on the selected condition (S1100).

If light responsiveness is set as the extraction condition (S315: light responsiveness), brightness of the currently selected frame and an immediately preceding frame is extracted (S1110). Brightness here may be an average brightness over the entire frame or may be a brightness in a certain region (a region where an object is present).

Subsequently, it is determined whether or not the brightness has increased or decreased (S1120, S1140). The determination is made, for example, based on whether or not a change rate of brightness exceeds a predetermined reference change rate.

If the brightness has increased (S1120: YES), the currently selected frame is set to a brightness increasing frame (S1130), and such setting is recorded in a same manner as the process of S555 (S1180), and then the present process proceeds to a process of S560. If the brightness has decreased (S1120: NO, S1140: YES), immediately preceding frame of the currently selected frame is set to a brightness decreasing frame (S1150), and the present process proceeds to the aforementioned process of S1180.

If the brightness has not increased or decreased (S1120: NO, S1140: NO), it is determined whether or not color balance has changed between the immediately preceding frame and the currently selected frame (S1160). In this process, it may be required to detect a change of a predetermined value or more in color (for example, balance of RGB or Lab values) in a region with a relatively high brightness in an image, and setting is performed such that a change in color of a light to be used for illumination, color of a signal light, or the like can be recognized.

If the color balance has changed (S1160: YES), the currently selected frame is set to a color changing frame (S1170), the present process proceeds to the aforementioned process of S1180. If the color balance has not changed (S1160: NO), the present process promptly proceeds to a process of S1180.

With this configuration above, it is possible to achieve a process to extract a frame of a moment at which hue or light intensity has changed.
When taking an image of a person, the person may dislike an image to be taken for the person's own reasons. Therefore, it may be configured such that a situation where a person dislikes an image to be taken, or a gesture/facial expression of disliking an image to be taken is detected as a rejection command, and clear imaging of the person in a taken image is suppressed if such rejection command is detected.

For example, in a case of executing a process while taking an image, focus may be placed not on a person but on a background or the like other than the person if a rejection command is detected. In a case of editing an already taken image, an image processing may be performed for making a target person unclear, such as blurring or pixelization of the target person, or for making the target person look more beautiful.

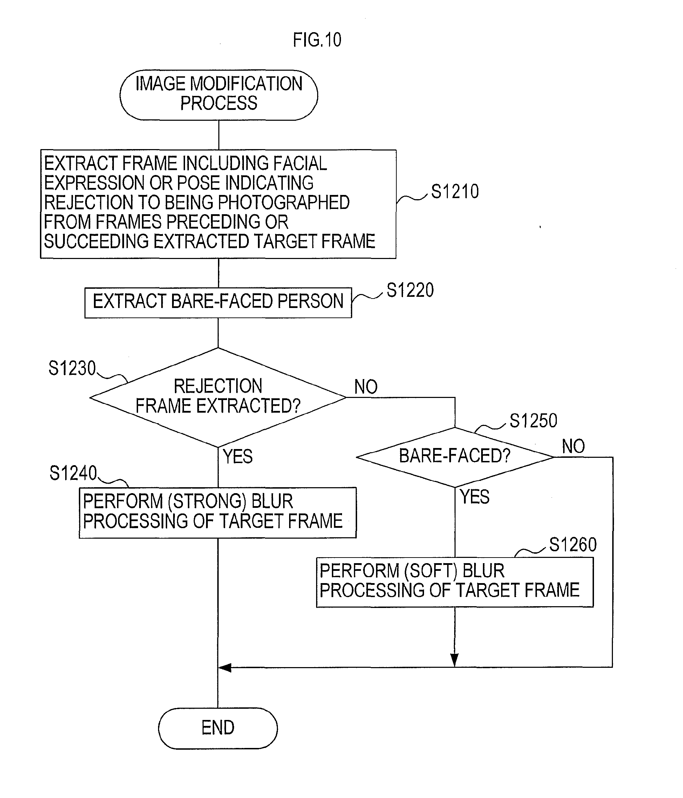

In the case of editing an already taken image, and performing the image processing for making the target person unclear, such as blurring or pixelization of the target person, for example, an image modification process shown in FIG. 10 may be executed. More specifically, as shown in FIG. 10, when editing an image (for example, for an extracted still image immediately after extracting the still image from a moving image), a rejection frame including a facial expression or pose indicating rejection to being photographed is extracted from frames (frames of a same scene) preceding or succeeding the extracted target frame (still image) (S1210).

For example, a disapproving look immediately after noticing a camera (based on an assumption that characteristic parameters of such facial expression are registered as in a case of a smiling face), a pose of making a cross mark with fingers or arms, or the like may be the facial expression or pose indicating rejection.

Subsequently, extraction of a woman wearing no makeup, i.e., a so-called "bare-faced" person, is performed (S1220). In this process, whether or not a person is "bare-faced" is determined by detecting a reflectance of an illumination light and a degree of change in color of each region of a skin part, and then a "bare-faced" frame is extracted.

More specifically, it may be assumed that a degree of reflection of ultraviolet rays is different between a case with makeup and a case with no makeup as cosmetics contain ingredients to reflect ultraviolet rays. Also, by wearing makeup, regions with changes in color, such as "age spots", "freckles", "moles", etc. are covered, and a degree of changes in color tends to be reduced. Accordingly, in the aforementioned process, a "bare-faced" frame is extracted by detecting these differences between the case with makeup and the case with no makeup.

Subsequently, it is determined whether or not a currently selected frame is a rejection frame or a "bare-faced" frame (S1230, S1250). If the currently selected frame is a rejection frame or a "bare-faced" frame (S1230: YES, or S1240: YES), a processing to blur a target object (here, a person's face) in a target frame is executed (S1240).

In a case where the currently selected frame is a rejection frame, the target object is blurred relatively greatly, to thereby reduce a color difference, a contrast, etc. with neighboring pixels in the image to an extent that the person cannot be identified (S1240). In a case where the currently selected frame is a "bare-faced" frame, the target object is blurred relatively slightly, to thereby reduce a color difference, a contrast, etc. with neighboring pixels in the image to an extent that the person can be identified but details thereof are obscure (S1260).

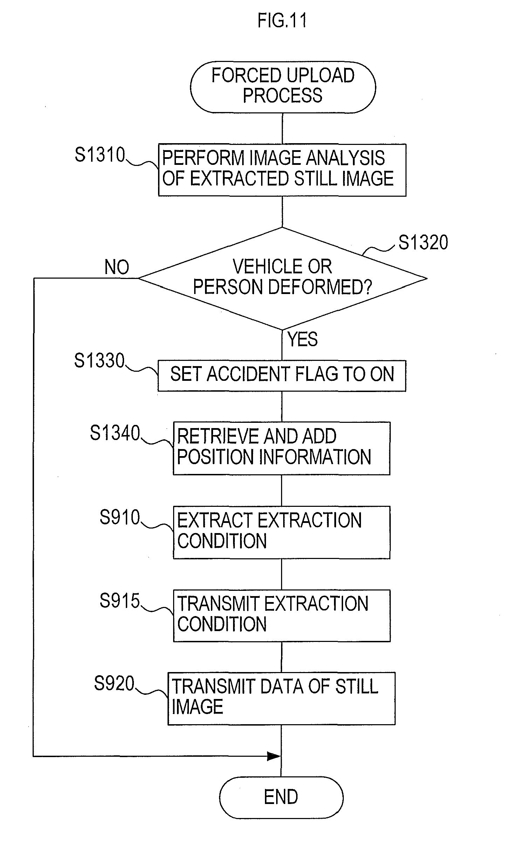

When these processes are finished, the image modification process is terminated.
Next, while a selected still image is uploaded to the server 30 in the above described embodiment, a still image of an accident or the like may be forcibly uploaded to the server 30. In this case, a process such as an upload process shown in FIG. 11 may be executed.

The upload process is a process executed by the microcomputer 11 when a still image is extracted. More specifically, as shown in FIG. 11, it is first determined whether or not a vehicle or a person is deformed by performing image analysis of an extracted still image (S1310, S1320). This process may be such that a determination is made using preceding and succeeding frames of the extracted still image.

If the vehicle or the person is not deformed (S1320: NO), a forced upload process is terminated. If the vehicle or the person is deformed (S1320: YES), an accident flag at the current still image is set to ON, position information indicating a position at which the current still image is taken is retrieved and the position information is added to the still image (S1340), and the aforementioned processes of S910 to S920 are executed.

With this configuration, when an image of an accident involving a vehicle or a person can be taken, it is possible to immediately send the taken image to the server.
Also, in the case of extracting a still image from a plurality of frames as described above, it may be configured such that shooting of a moving image is started when a certain trigger is inputted and thereafter the shooting of the moving image is terminated, in order to save a recording area while recording. For example, it may be configured such that a dummy sound, such as a shutter sound, is outputted and shooting of a moving image is started at the same time, and then the shooting of the moving image is terminated at a timing after extraction of a facial expression of a person who hears the dummy sound and is relieved to assume that the shooting has been finished.

Specifically, in the extraction condition setting process shown in FIG. 8, it is determined (S1040) whether or not dummy sound link indicating extraction of a still image at a timing linked to a dummy sound is selected by the user after the process of S1030. If dummy sound link is selected (S1040: YES), setting of dummy sound link is performed (S1050) and the extraction condition setting process is terminated. If dummy sound link is not selected (S1040: NO), the extraction condition setting process is terminated.

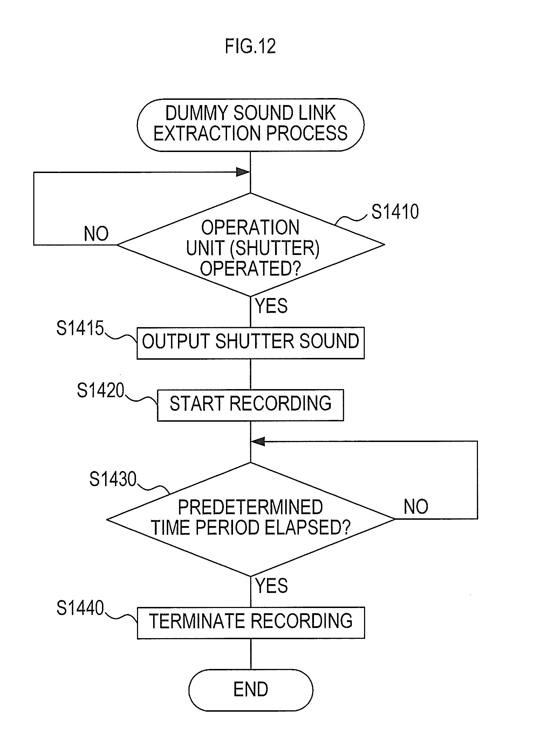

Also, a dummy sound link extraction process shown in FIG. 12 is executed. The dummy sound link extraction process is a process that is started, for example, when setting of dummy sound link is made, and thereafter is executed repeatedly until the setting of dummy sound link is released.

In the dummy sound link extraction process, it is first determined whether or not the operation unit 21 (the shutter) is operated (S1410). If the operation unit 21 is not operated (S1410: NO), this process is repeated. If the operation unit 21 is operated (S1410: YES), a shutter sound is outputted through a loudspeaker (not shown) or the like (S1415), and recording of a moving image (a plurality of frames) is started (S1420).

Subsequently, it is determined whether or not a predetermined time period has elapsed (S1430). Here, the predetermined time period, which indicates a time period wherein a person as an imaging object will become relaxed after the shooting is finished, may be set to, for example, three seconds or so.

If the predetermined time period has not elapsed (S1430: NO), the current process is repeated. If the predetermined time period has elapsed (S1430), the recording of the moving image is terminated and the dummy sound link extraction process is terminated. After the termination of this process, the still image extraction process (FIGS. 4A to 4C, or FIGS. 9A and 9B) is performed, and thereby a best still image is to be extracted.

While recording of the moving image is started immediately after a trigger (an operation of the operation unit 21) occurs in the dummy sound link process described above, recording of the moving image may be started after elapse of a predetermined time period. Also, recording of a moving image may be performed by overwriting an old moving image, for example, in a FIFO method.

Especially in a case where extraction of a still image (the still image extraction process, etc.) is performed before the old moving image is overwritten by a new moving image, a best suited still image may be stored.
Further, while a single still image is extracted in the above described configuration, it may be configured such that several preceding and/or succeeding frames of the frame (still image) to be extracted in the above described process are extracted, and a user is allowed to select still images to be extracted from these frames. For example, these frames may be reproduced at a lower speed than a normal reproduction speed of a moving image (that is, a plurality of still images are displayed one by one in a slowly and sequentially changing manner at several second intervals), and a frame when an operation of pressing a shutter is inputted through the operation unit 21 may be selected as a frame to be extracted.

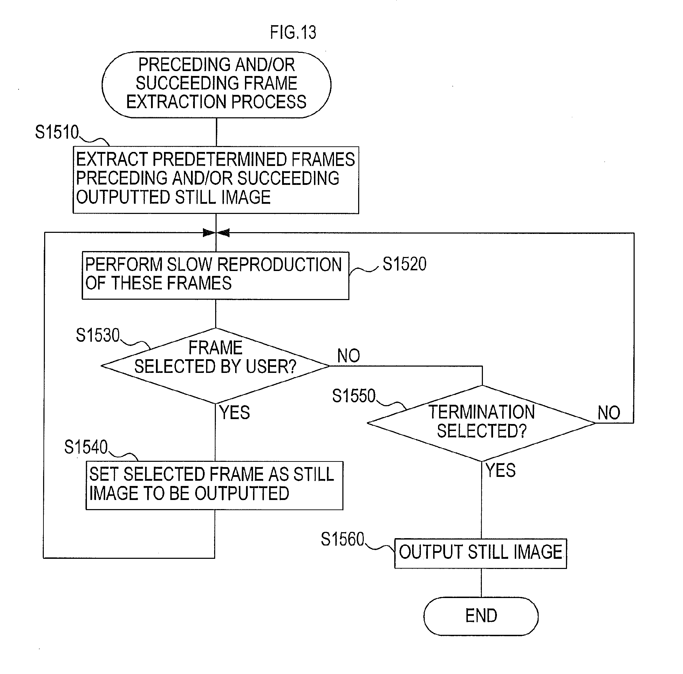

Specifically, a preceding and/or succeeding frame extraction process shown in FIG. 13 may be executed. In the preceding and/or succeeding frame extraction process, predetermined frames preceding and/or succeeding an outputted still image are first extracted (S1510).
For example, a series of several preceding frames preceding a target still image may be extracted, or a series of several succeeding frames succeeding the target still image may be extracted, or several preceding and succeeding frames may be extracted. In addition, it is not required to extract a series of frames, but extraction may be performed at intervals of a predetermined number of frames in preceding or succeeding frames of the target still image.

Subsequently, slow reproduction of these frames is performed repeatedly (S1520). That is, although when a moving image is displayed at 30fps, a plurality of target frames are displayed on the display unit 22 in a sequentially changing manner at a speed of, for example, approximately 0.3fps in the current process.

Subsequently, it is determined whether or not a frame has been selected by the user (S1530). In this process, it is determined that a frame currently being reproduced in the process of S1520 has been selected if the operation unit 21 is operated, for example.

If a frame has been selected (S1530: YES), the selected frame is set as a still image to be outputted, and the present process returns to the process of S1520. If a frame has not been selected (S1530: NO), it is then determined whether or not termination of reproduction has been selected by the user through the operation unit 21 (S1550).

If termination of reproduction has not been selected (S1550: NO), the present process returns to the process of S1520. If termination of reproduction has been selected (S1550: YES), the still image selected as a still image to be outputted is outputted (S1560), and the preceding and/or succeeding frame extraction process is terminated. The outputted still image is recorded in the still image recording unit 16.

Still further, while recording of a moving image is started when power is turned on or when an operation by a user is performed as a starting point in the aforementioned embodiment, it may be configured such that a timing at which a user makes an attempt to shoot is detected, and recording of a moving image is started at the timing in order to save a capacity of the moving image recording unit 13.

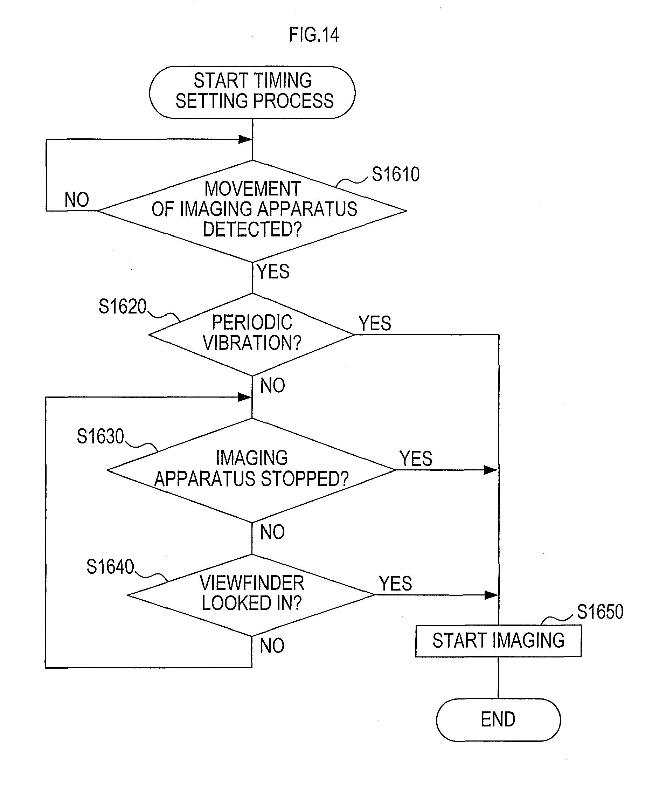

Specifically, a process shown in FIG. 14 may be executed. A start timing setting process is a process that is started when, for example, power to the imaging apparatus 10 is turned on.
In the present embodiment, it is configured such that the imaging unit 12 is provided with a 3D acceleration sensor, a gyroscope, etc., and the microcomputer 11 is capable of detecting presence or absence of movement of the imaging apparatus 10. Also, the imaging unit 12 is configured to have an imaging area not only on an object side but also on a user side (on a viewfinder side of the imaging unit 12), and is capable of detecting that the user looks in the viewfinder by detecting an approach of the user's face to the imaging area.

In the start timing setting process, as shown in FIG. 14, it is first determined whether or not movement of the imaging apparatus 10 is detected (S1610). If movement of the imaging apparatus 10 is not detected (S1610: NO), a process of S1610 is repeated.

If movement of the imaging apparatus 10 is detected (S1610: YES), it is determined whether or not the movement is periodic (that is, whether or not the movement is a periodic vibration) (S1620). If the movement is a periodic vibration (S1620: YES), imaging is started (S1650), and the start timing setting process is terminated.

If the movement is not a periodic vibration (S1620: NO), it is determined whether or not the imaging apparatus 10 has stopped (S1630). If the imaging apparatus 10 has stopped (S1630: YES), imaging is started (S1650), and the start timing setting process is terminated.

If the imaging apparatus 10 has not stopped (S1630: NO), it is determined whether or not the viewfinder is looked in (S1640). If the viewfinder is not looked in (S1640: NO), the present process returns to the process of S1630. If the viewfinder is looked in (S1640: YES), imaging is started (S1650), and the start timing setting process is terminated.

While the ROM included in the microcomputer 11 is the memory 111 in the above described embodiment, the memory 111 may be constituted as a hard disk drive, a RAM, such as a flash memory, or any other known memory.

Even with the configurations of such modified examples, the same effects as those of the configuration of the above described embodiment may be achieved.

## Claims

1. A still image extraction apparatus for extracting a specific frame as a still image from a plurality of frames, the apparatus comprising:
an extraction condition registration device configured to register an extraction condition, which is specified by a user of the still image extraction apparatus, for extracting the still image in an extraction condition recording unit;
an extraction determination device configured to determine in a frame-by-frame manner whether or not the plurality of frames satisfy the extraction condition registered in the extraction condition recording unit; and
an extraction device configured to extract, as a still image, a frame that has been determined to satisfy the extraction condition.

2. The still image extraction apparatus according to claim 1, further comprising:
an exclusion condition registration device configured to register an exclusion condition, which is specified by the user of the still image extraction apparatus, for not extracting a still image in an exclusion condition recording unit;
an exclusion determination device configured to determine in a frame-by-frame manner whether or not the plurality of frames satisfy the exclusion condition registered in the exclusion condition recording unit; and
an extraction inhibition device configured to inhibit extraction of a frame determined to satisfy the exclusion condition among frames determined to satisfy the extraction condition by the extraction device.

3. The still image extraction apparatus according to claim 1 or claim 2, further comprising:
an extraction condition retrieving device configured to retrieve the extraction condition from a server that is located outside the still image extraction apparatus and stores an extraction condition for extracting a still image.

4. The still image extraction apparatus according to claim 3, further comprising:
an extraction condition transmission device configured to transmit the extraction condition recorded in the extraction condition recording unit to the server that stores the extraction condition for extracting a still image and also stores, when receiving an extraction condition from outside, the received extraction condition.

5. The still image extraction apparatus according to claim 2,
wherein the exclusion condition registration device is capable of registering, as the exclusion condition, inhibition of extraction of a similar still image,
wherein the exclusion determination device categorizes, in a case where inhibition of extraction of a similar still image is registered as the exclusion condition in the exclusion condition recording unit, the plurality of frames into groups each consisting of similar frames, and determines whether or not two or more frames are present in each of the groups, and
wherein the extraction inhibition device inhibits extraction of two or more frames from the each of the groups.

6. The still image extraction apparatus according to claim 5, wherein the extraction device extracts a frame that most satisfies the extraction condition from the each of the groups.

7. The still image extraction apparatus according to any one of claims 1 to 6,
wherein the extraction condition registration device is capable of registering a face photograph of a specific person and also, as the extraction condition, extraction of a frame including a face that is similar to the face photograph, and
wherein the extraction determination device determines, in a case where extraction of a frame including a face that is similar to the face photograph is registered as the extraction condition in the extraction condition recording unit, whether or not a face included in each of the frames is similar to the face photograph recorded in the extraction condition recording unit.

8. The still image extraction apparatus according to any one of claims 1 to 7,
wherein the extraction condition registration device is capable of registering, as the extraction condition, extraction of a moment of a collision of an object, and
wherein the extraction determination device, in a case where extraction of a moment of a collision of an object is registered as the extraction condition in the extraction condition recording unit, detects a movement of an object present in respective frames by sequentially and mutually comparing the frames along chronological order and determines whether or not a shape of the object has started being deformed by tracking the object.

9. The still image extraction apparatus according to any one of claims 1 to 8,
wherein the extraction condition registration device is capable of registering, as the extraction condition, extraction of a time when a deformation amount of an object is greatest, and
wherein the extraction determination device, in a case where extraction of a time when a deformation amount of an object is greatest is registered as the extraction condition in the extraction condition recording unit, detects a movement of an object present in respective frames by sequentially and mutually comparing the frames along chronological order, and determines whether or not the object was deformed and the deformation has stopped by tracking the object.

10. The still image extraction apparatus according to any one of claims 1 to 9, further comprising:
a display output device configured to sequentially output the plurality of frames to a display device; and
an external command input device configured to input a specific external command by the user,
wherein the extraction determination device determines, when a specific external command is inputted through the external command input device while the display output device sequentially outputs the plurality of frames, that a frame preceding a frame outputted at a current moment by the display output device by a predetermined number of frames depending on a response speed of the user satisfies the extraction condition.

11. The still image extraction apparatus according to any one of claims 1 to 10,
wherein the extraction condition registration device is capable of registering, as the extraction condition, a reaching to a highest reaching point, and
wherein the extraction determination device, in a case where a reaching to a highest reaching point is registered in the extraction condition recording unit, detects a movement of an object present in respective frames by sequentially and mutually comparing the frames along chronological order, and determines whether or not the object has moved upward and afterward has stopped moving.

12. The still image extraction apparatus according to any one of claims 1 to 11,
wherein the extraction device includes:
a matching frame extraction device configured to extract a matching frame representing a frame determined to satisfy the extraction condition;
a preceding or succeeding frame extraction device configured to extract preceding or succeeding frames representing a predetermined number of frames imaged immediately preceding or succeeding the matching frame; and
a selective extraction device configured to extract, as the still image, a frame selected by the user from among the matching frame and preceding or succeeding frames.

13. A still image extraction program configured to cause a computer to function as respective devices constituting the still image extraction apparatus according to any one of claims 1 to 12.
